# EUROPEAN PATENT APPLICATION

(11) **EP 4 635 447 A1**
(43) Date of publication of application: **22.10.2025**
(21) Application number: 24170920.3
(22) Date of filing: 18.04.2024
(51) Int. Cl.: A61C 8/00, A61C 13/00, B33Y 10/00, B33Y 30/00, B33Y 80/00

(54) **METHOD AND APPARATUS FOR PRODUCING A MESOSTRUCTURAL ELEMENT AND METHOD FOR DENTAL RESTORATION IN AN ORAL CAVITY**

(71) Applicant: TRUMPF Additive Manufacturing Italia S.r.l., 36015 Schio (VI) (IT)
(72) Inventor: Boron, Mattia, 35036 Montegrotto Terme (IT); Volta, Davide, 10020 Monteu da Po (IT)
(74) Representative: Trumpf Patentabteilung

(57) **Abstract**

The invention relates to a method for producing a mesostructural element (3), the mesostructural element (3) being adapted to be fixed to at least one oral implant and to carry at least one suprastructure for prosthetic replacement of a plurality of teeth in an oral cavity, the method comprising:
- arranging at least one implant proxy element (17) at a predetermined position in a jawbone model (7),
- attaching at least one preform element (19) to the at least one implant proxy element (17),
- forming the mesostructural element (3) onto the at least one preform element (19) by laser metal deposition, wherein
- the jawbone model (7) and a LMD nozzle (11) are positioned relative to each other by a positioning apparatus (13) comprising at least four axes, and
- releasing the at least one preform element (19) from the at least one implant proxy element (17) and obtaining the mesostructural element (3).

## Description

The invention relates to a method and an apparatus for producing a mesostructural element, and a method for dental restoration in an oral cavity.

For dental restoration of a single tooth, an implant can be provided to which a mesostructural element is attached such that a suprastructure replicating the single tooth may in turn be attached. The implant and/or the mesostructural element can be formed at least in part by a powder-bed based process. In particular, the mesostructural element can be formed by providing a preform element, and building the mesostructural element in one piece onto the preform element in the powder-bed based process. However, this process route is not viable for the dental restoration of a plurality of teeth, since different attachment planes for attaching the mesostructural element to different implant sites and/or different preforms will almost always have different orientations in space due to individual and very specific local jawbone geometries, such that the different attachment planes cannot be arranged in a single plane, which, however, is a requirement for a powder-bed based building process. Forming mesostructural elements in a machining or cutting process, however, is cumbersome, costly, and comes with a lot of waste of material.

It is therefore an object of the invention to provide a method and an apparatus for producing a mesostructural element, and a method for dental restoration in an oral cavity.

This object is achieved by providing the present technical teachings, in particular the teachings of the independent claims as well as the teachings of the dependent claims and the preferred embodiments disclosed in the description.

According to a first aspect, the object is in particular achieved by providing a method for producing a mesostructural element - henceforth referred to as a production method -, the mesostructural element being adapted to be fixed to at least one oral implant, or - shortly but synonymously - "implant", and to carry at least one suprastructure for prosthetic replacement of a plurality of teeth in an oral cavity, the method comprising:
- arranging at least one implant proxy element at a predetermined position in a jawbone model,
- attaching at least one preform element to the at least one implant proxy element,
- forming the mesostructural element onto the at least one preform element by laser metal deposition, wherein
- the jawbone model and a LMD nozzle are positioned relative to each other by a positioning apparatus comprising at least four axes, and
- releasing the at least one preform element from the at least one implant proxy element, and obtaining the mesostructural element.

By arranging the at least one implant proxy element in the jawbone model at a predetermined position - henceforth also referred to as a predetermined proxy position -, it is possible in a reliable and inexpensive way to provide a geometrically correct structure for precise positioning of the at least one preform element. Thus, any attachment plane of the at least one preform element will be correctly arranged in space with respect to the individual jawbone geometry. Further, by then forming the mesostructural element onto the at least one preform element by laser metal deposition, it is possible to selectively and individually form the mesostructural element independent of the attachment plane's position on the at least one preform element, and it is even possible to form the mesostructural element when a plurality of preform elements having a plurality of differently oriented attachment planes is present. In order to provide this flexibility, advantageously the jawbone model and the LMD nozzle are positioned relative to each other by the positioning apparatus, whereby any relative position can easily be reached by appropriate control of at least one of the at least four axes. Thus, a geometrically highly precise and individually formed mesostructural element can be obtained in an easy and inexpensive way. Still further, by not building the complete structure, comprising the preform element and the mesostructural element, in one-step in the LMD process, but rather providing the preform element and then forming the mesostructural element onto the preform element in the LMD process, it is advantageously possible to form the preform element in a separate process adapted to the individual requirements for the preform element, e.g. in a cutting or machining process, in a powder bed-based process, or even in a separate LMD process.

The mesostructural element is particularly adapted to be fixed to at least one oral implant and to carry at least one suprastructure for prosthetic replacement of a plurality of teeth in a human oral cavity, more particularly, the mesostructural element is adapted for use in the inventive method for dental restoration, or in a method for dental restoration according to at least one of the below disclosed embodiments.

In the context of the present technical teachings, a mesostructural element in particular is understood to be an element which is adapted to be arranged between a dental implant on the one hand and at least one suprastructure for prosthetic replacement of a plurality of teeth on the other hand, wherein the mesostructural element particularly can be fixed or attached to the dental implant, and the suprastructure can be fixed or attached to the mesostructural element. A suprastructure is understood to be an element which resembles at least one tooth, preferably a plurality of teeth, and in particular replaces the at least one tooth, in particular the plurality of teeth, in the oral cavity as a prosthesis, particularly for functional and cosmetic purposes. Thus, the at least one suprastructure resembling the plurality of teeth is carried by the mesostructural element, and the mesostructural element is fixed to a patient's jawbone by at least one implant.

The suprastructure may be in the shape of a single tooth; in this case, the mesostructural element is adapted to carry a plurality of suprastructures. In the alternative, the suprastructure itself is in the shape of a plurality of teeth; in this case the mesostructural element may be adapted to carry only a single suprastructure, or still a plurality of suprastructures.

In the context of the present technical teachings, an implant, in particular an oral or dental implant, in particular is understood to be an element adapted to be implanted into an oral cavity, in particular a jawbone, and further adapted to be fixed to a mesostructural element, such that the mesostructural element is fixed to the jawbone via the implant.

The oral implant may be produced by machining or cutting, or in an additive manufacturing process, in particular a powder bed-based process, or itself in an LMD process, or in a combination of at least two of these processes, wherein preferably at least one first part of the oral implant is produced in a first process of these processes, wherein at least one second part of the oral implant is produced in a second process of these processes.

Further, in the context of the present technical teachings, an implant proxy element in particular is understood to be an element which is adapted to stand for an implant in a jawbone model, at a position relative to the jawbone model corresponding to a position of the actual implant relative to the actual jawbone according to which the jawbone model is formed. Further, the implant proxy element is adapted to be fixed to the mesostructural element in the same way as the implant. In an embodiment, the implant proxy element can itself be an implant, only at least not necessarily the same actual implant which later will be used for dental restoration in the actual jawbone with the obtained mesostructural element.

The implant proxy element may be produced by machining or cutting, or in an additive manufacturing process, in particular a powder bed-based process, or itself in an LMD process, or in a combination of at least two of these processes, wherein preferably at least one first part of the implant proxy element is produced in a first process of these processes, wherein at least one second part of the implant proxy element is produced in a second process of these processes.

In an embodiment, the positioning apparatus comprises at least five axes. In particular, the positioning apparatus may comprise exactly five axes.

The mesostructural element obtained by the method disclosed herein preferably includes the at least one preform element. This, in particular, is understood to mean that the at least one preform element is integrated into the mesostructural element in one piece in the LMD process. The material applied onto the at least one preform element by the LMD nozzle most preferably encompasses or encapsulates the at least one preform element during formation of the mesostructural element, such that the at least one preform element is incorporated into the mesostructural element. In an embodiment, the obtained mesostructural element includes a plurality of preform elements in one piece.

In an embodiment, the method is carried out by using an apparatus for producing a mesostructural element according to the invention, or an apparatus in accordance with at least one of the embodiments as disclosed below.

In the context of the present technical teachings, laser metal deposition in particular is understood to mean a process, wherein a laser beam heats a workpiece locally and creates a molten pool on it. Fine metal powder is then sprayed directly into the weld pool from a LMD nozzle typically arranged in the processing optics. The applied metal powder than melts in the weld pool and bonds with the base material. It is possible, that the metal powder particles are already heated to almost melting temperature above the substrate surface. In this case, less time is required to melt the powder particles.

In an embodiment,
- a plurality of implant proxy elements is arranged in the jawbone model, each implant proxy element at an assigned predetermined position, wherein
- a separate preform element is attached to each of the implant proxy elements, wherein
- the mesostructural element is formed onto the preform elements, such that the preform elements are mechanically connected by the mesostructural element to form one piece, wherein
- the mesostructural element is obtained by releasing the plurality of preform elements from the implant proxy elements.

Optionally, attachment planes of the preform elements have different orientations relative to the jawbone model. Advantageously, the different preform elements may have different attachment planes having different orientations in space, and can still be mechanically connected by the mesostructural element formed in the LMD process by the LMD nozzle. In particular, the different preform elements can be integrated into the mesostructural element, thus they are included by the mesostructural element, particularly in one piece.

In an embodiment, the LMD nozzle is positioned relative to the preform elements by the positioning apparatus. In particular, the LMD nozzle is positioned by the positioning apparatus relative to the attachment planes of the preform elements.

In an embodiment, the positioning apparatus comprises at least one of a first robot arm carrying the LMD nozzle, a second robot arm carrying the jawbone model, and a tilt/turn table - or, synonymously, tilt and turn table - carrying the jawbone model.

Optionally, the tilt/turn table has an adjustable height. In particular, the tilt/turn table has a height adjustment device, or a height adjustment device is assigned to the tilt/turn table to adjust the height thereof.

In particular, the positioning apparatus may only comprise the first robot arm carrying the LMD nozzle, while the jawbone model is fixed in space. Alternatively, the positioning apparatus may only comprise the second robot arm carrying the jawbone model, while the LMD nozzle is fixed in space. Alternatively, the positioning apparatus may only comprise the tilt/turn table, optionally with adjustable height, carrying the jawbone model, while the LMD nozzle is fixed in space. Alternatively, the positioning apparatus may comprise the first robot arm carrying the LMD nozzle and the second robot arm carrying the jawbone model. Alternatively, the positioning apparatus may comprise the first robot arm carrying the LMD nozzle and the tilt/turn table carrying the jawbone model - optionally with adjustable height.

At least one robot arm, selected from the first robot arm and the second robot arm, may comprise at least four axes, in particular at least five axes, preferably exactly five axes.

In an embodiment, the jawbone model is fixed at a predetermined position relative to the positioning apparatus. Advantageously, the precise position of the jawbone model is known.

In addition, or in the alternative, a position of the jawbone model relative to the positioning apparatus is determined by a position determination device. Advantageously, the position of the jawbone model can be detected and/or verified with high precision by the position determination device.

In an embodiment, the position determination device is selected from a group, consisting of a camera, a coordinate-measuring machine, and a combination of at least two of these devices.

For detecting the position of the jawbone model, the jawbone model itself may have at least one first position marker attached to or otherwise provided on the jawbone model at a first predetermined marker position in a model-coordinate system. In addition, or in the alternative, at least one second position marker may be arranged at a second predetermined marker position in an apparatus-coordinate system of the positioning apparatus, in particular attached to or otherwise provided on the positioning apparatus itself. The position of the jawbone model relative to the positioning apparatus may then in particular be determined by determining the position of the at least one first position marker relative to the at least one second position marker.

At least one position marker, selected from the first position marker and the second position marker, may be an optical marker, e.g. a visual symbol like an image, at least one character, at least one digit or number, a preferably two-dimensional code, like a QR-code, or a tactile marker.

In an embodiment, the jawbone model is formed from a modelling material according to a jawbone geometry, in particular according to an individual jawbone geometry of a patient receiving dental restoration, in particular according to the individual jawbone geometry of the very patient for whom the mesostructural element is produced.

Optionally, the modelling material is selected from a group, consisting of chalk, wet chalk, limestone, resin, in particular organic resin, in particular polymer resin, and a combination of at least two of these modelling materials.

In addition, or in the alternative, the jawbone geometry is obtained by at least one geometry obtaining method, selected from a group, consisting of dental impression, intraoral scanning, X-ray scanning, and at least two of these geometry obtaining methods. In particular, the jawbone geometry is obtained at or within the patient's mouth.

In an embodiment, at least one suprastructure is attached to the mesostructural element, the at least one suprastructure replicating a plurality of teeth.

According to a second aspect, the object is in particular achieved by providing a method for dental restoration in an oral cavity - henceforth referred to as a restoration method -, comprising:
- arranging at least one implant in a jawbone of the oral cavity,
- attaching a mesostructural element obtained by a production method according to the invention, or according to at least one of the above disclosed embodiments, to the at least one implant, and
- attaching at least one suprastructure replicating a plurality of teeth to the mesostructural element.

With respect to the restoration method, essentially the same advantages are achieved as with respect to the production method.

In particular, the oral cavity is a human oral cavity of a patient.

In particular, the at least one implant is arranged at a predetermined implant position in the jawbone, wherein the predetermined implant position corresponds to the predetermined proxy position of the at least one respective implant proxy element in the jawbone model corresponding to the patient's jawbone.

In an embodiment, a plurality of implants is arranged in the jawbone of the oral cavity, and the mesostructural element is attached to the plurality of implants.

According to a third aspect, the object is in particular achieved by providing an apparatus for producing a mesostructural element, in particular for carrying out the production method according to the invention, or according to at least one of the above disclosed embodiments, the apparatus comprising:
- a model mounting for fixing a jawbone model,
- a LMD device comprising a LMD nozzle,
- a positioning apparatus for positioning the model mounting and the LMD nozzle relative to each other, the positioning apparatus comprising at least four axes, and
- a control device for controlling the positioning apparatus and the LMD device.

With respect to the apparatus, essentially the same advantages are achieved as with respect to the production method or the restoration method.

In particular, the LMD device has a laser beam source adapted to emit a laser beam.

In an embodiment, the LMD device has a laser power of 100 W to 300 W. In particular, the laser beam source has an optical power of 100 W to 300 W. Advantageously, the LMD device can be relatively small and have a relatively low optical power as compared with typical LMD devices. Thus the LMD device may be easy in handling and inexpensive.

In an embodiment, the apparatus further comprises a position determination device for determining a position of a jawbone model fixed at the model mounting relative to the positioning apparatus.

Optionally, the position determination device is selected from a group, consisting of a camera, a coordinate-measuring machine, and a combination of at least two of these devices.

In an embodiment, the positioning apparatus comprises at least five axes, preferably exactly five axes.

In an embodiment, the positioning apparatus comprises at least one of: a first robot arm carrying the LMD nozzle, a second robot arm carrying the model mounting, and a tilt/turn table carrying the model mounting.

Optionally, the tilt/turn table has an adjustable height. In particular, the tilt/turn table has a height adjustment device, or the positioning apparatus has a height adjustment device assigned to the tilt/turn table to adjust the height of the tilt/turn table.

The invention is explained below in further detail with reference the drawing. In the drawing
- Figure 1: shows a schematic representation of an embodiment of an apparatus for producing a mesostructural element for dental restoration, and
- Figure 2: shows an embodiment of a mesostructural element, manufactured with the apparatus according to figure 1.

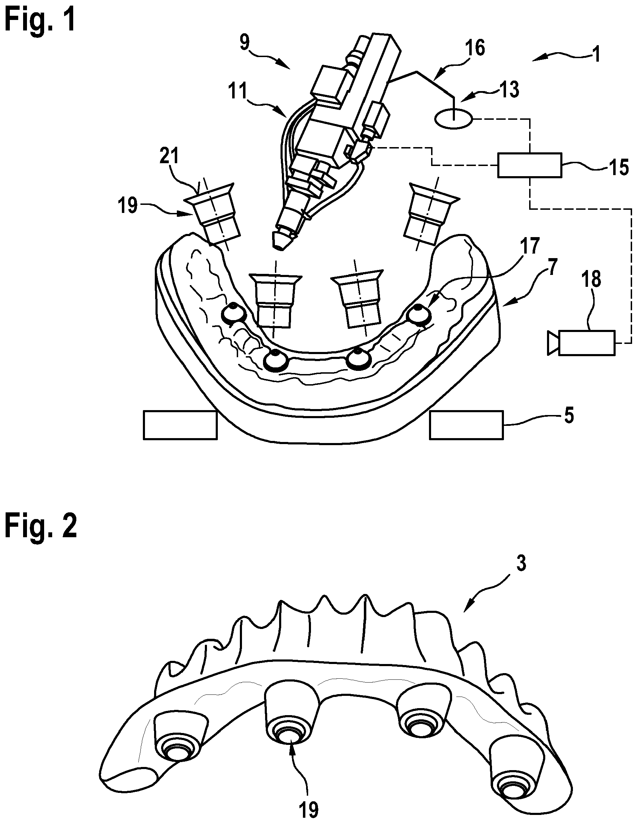

**Fig. 1** shows a schematic representation of an embodiment of an apparatus 1 for producing a mesostructural element 3 - shown in figure 2 - for dental restoration.

In order to simplify the figures, elements which appear as a plurality, are only once assigned with a corresponding reference numeral.

The apparatus 1 comprises a model mounting 5 - only schematically depicted here - for fixing a jawbone model 7, a LMD device 9 comprising a LMD nozzle 11, a positioning apparatus 13 - also only schematically depicted here - for positioning the model mounting 5 and the LMD nozzle 11 relative to each other, the positioning apparatus 13 comprising at least four axes, and a control device 15 for controlling the positioning apparatus 13 and the LMD device 9.

The apparatus 1 may further comprise a position determination device 18 for determining a position of a jawbone model 7 fixed at the model mounting 5 relative to the positioning apparatus 13. The position determination device 18 may be selected from a group, consisting of a camera, a coordinate-measuring machine, and a combination of at least two of these devices. For detecting the position of the jawbone model 7, the jawbone model 7 itself may have at least one first position marker attached to or otherwise provided on the jawbone model 7 at a first predetermined marker position in a model-coordinate system. In addition, or in the alternative, at least one second position marker may be arranged at a second predetermined marker position in an apparatus-coordinate system of the positioning apparatus 13, in particular attached to or otherwise provided on the positioning apparatus 13 itself. The position of the jawbone model 7 relative to the positioning apparatus 13 may then in particular be determined by determining the position of the at least one first position marker relative to the at least one second position marker. At least one position marker, selected from the first position marker and the second position marker, may be an optical marker, e.g. a visual symbol like an image, at least one character, at least one digit or number, a preferably two-dimensional code, like a QR-code, or a tactile marker.

Preferably, the positioning apparatus 13 comprises at least five axes, preferably exactly five axes.

Preferably, the positioning apparatus 13 comprises at least one of: a first robot arm 16 carrying the LMD nozzle 11, a second robot arm carrying the model mounting 5, and a tilt/turn table carrying the model mounting 5. The tilt/turn table may have an adjustable height. Preferably, the positioning apparatus 13 comprises exactly five axes. Preferably, the positioning apparatus 13 may only comprise the first robot arm 16 carrying the LMD nozzle 11, while the jawbone model 7 is fixed in space at a predetermined position relative to the positioning apparatus 13. The first robot arm 16 preferably comprise five axes.

In a preferred method for producing the mesostructural element 3, at least one implant proxy element 17 is arranged at a predetermined position in the jawbone model 7; in particular, as shown here, a plurality of implant proxy elements 17 is arranged each at an assigned predetermined proxy position in the jawbone model 7. Then, at least one preform element 19 is attached to the at least one implant proxy element 17; in particular, a plurality of preform elements 19 is attached each separately to an assigned implant proxy element 17 of the implant proxy elements 17. The mesostructural element 3 is formed onto the preform elements 19 by laser metal deposition, in particular such that the preform elements 19 are mechanically connected by the mesostructural element 3 to form one single piece, while the jawbone model 7 and the LMD nozzle 11 are positioned relative to each other by the positioning apparatus 13. In particular, the LMD nozzle 11 is guided by the positioning apparatus 13 along the preform elements 19 in order to form the mesostructural element 3 by encapsulating the preform elements 19 with the material of the mesostructural element 3.

Then, the preform elements 19 are released from the implant proxy elements 17, and thus the mesostructural element 3 is obtained.

The different preform elements 19 may most probably have attachment planes 21 having different orientations in space due to the individual geometry of the jawbone model 7. Still, the mesostructural element 3 can be formed onto the preform elements 19 by laser metal deposition, because the LMD nozzle 11 is suitably positioned and guided relative to the jawbone model 7 by the positioning apparatus 13 during the LMD process, such that any relative position can easily be reached by appropriate control of the at least four axes.

Preferably, the jawbone model 7 is formed from a modelling material according to a jawbone geometry, in particular according to an individual jawbone geometry of a patient receiving dental restoration, in particular according to the individual jawbone geometry of the very patient for whom the mesostructural element 3 is produced. Preferably, the modelling material is selected from a group, consisting of chalk, wet chalk, limestone, resin, in particular organic resin, in particular polymer resin, and a combination of at least two of these modelling materials. In addition, or in the alternative, the jawbone geometry is obtained by at least one geometry obtaining method, selected from a group, consisting of dental impression, intraoral scanning, X-ray scanning, and at least two of these geometry obtaining method. In particular, the jawbone geometry is obtained at or within the patient's oral cavity or - synonymously - mouth.

**Fig. 2** shows an embodiment of the mesostructural element 3 manufactured with the apparatus 1 according to figure 1.

The same or functionally equivalent elements are assigned the same reference numerals in all figures, such that reference is made in each case to the preceding explanations.

The mesostructural element 3 preferably includes the preform elements 19. In particular, he preform elements 19 are integrated into the mesostructural element 3 in one piece. The material applied onto the preform elements 19 by the LMD nozzle 11 preferably encompasses or encapsulates the preform elements 19 while the mesostructural element 3 is formed, such that the preform elements 19 are incorporated into the mesostructural element 3.

In an embodiment of a method for dental restoration in an oral cavity, implants are arranged at predetermined implant positions in a jawbone of the oral cavity, the mesostructural element 3 is attached to the implants, and at least one suprastructure - not shown here - replicating a plurality of teeth is attached to the mesostructural element 3.

The predetermined implant positions correspond to the predetermined proxy positions of the respective implant proxy elements 17 in the jawbone model 7.

## Claims

1. Method for producing a mesostructural element (3), the mesostructural element (3) being adapted to be fixed to at least one oral implant and to carry at least one suprastructure for prosthetic replacement of a plurality of teeth in an oral cavity, the method comprising:
- arranging at least one implant proxy element (17) at a predetermined position in a jawbone model (7),
- attaching at least one preform element (19) to the at least one implant proxy element (17),
- forming the mesostructural element (3) onto the at least one preform element (19) by laser metal deposition, wherein
- the jawbone model (7) and a LMD nozzle (11) are positioned relative to each other by a positioning apparatus (13) comprising at least four axes, and
- releasing the at least one preform element (19) from the at least one implant proxy element (17) and obtaining the mesostructural element (3).

2. Method according to claim 1, wherein
- a plurality of implant proxy elements (17) is arranged in the jawbone model (7), each implant proxy element (17) at an assigned predetermined position, wherein
- a separate preform element (19) is attached to each of the implant proxy elements (17), wherein
- optionally, attachment planes (21) of the preform elements (19) have different orientations relative to the jawbone model (7), wherein
- the mesostructural element (3) is formed onto the preform elements (19), such that the preform elements (19) are mechanically connected by the mesostructural element (3) to form one piece, wherein
- the mesostructural element (3) is obtained by releasing the plurality of preform elements (19) from the implant proxy elements (17).

3. Method according to claim 2, wherein the LMD nozzle (11) is positioned relative to the preform elements (19), in particular relative to the attachment planes (21) of the preform elements (19), by the positioning apparatus (13).

4. Method according to any of the preceding claims, wherein the positioning apparatus (13) comprises at least one of
- a first robot arm (16) carrying the LMD nozzle (11),
- a second robot arm carrying the jawbone model (7), and
- a tilt/turn table, optionally with adjustable height, carrying the jawbone model (7).

5. Method according to any of the preceding claims, wherein
- the jawbone model (7) is fixed at a predetermined position relative to the positioning apparatus (13), and/or
- a position of the jawbone model (7) relative to the positioning apparatus (13) is determined by a position determination device (18).

6. Method according to claim 5, wherein the position determination device (18) is selected from a group, consisting of a camera, a coordinate-measuring machine, and a combination of at least two of these devices.

7. Method according to any of the preceding claims, wherein the jawbone model (7) is formed from a modelling material according to a jawbone geometry, wherein optionally
- the modelling material is selected from a group, consisting of chalk, wet chalk, limestone, resin, in particular organic resin, in particular polymer resin, and a combination of at least two of these modelling materials, and/or
- the jawbone geometry is obtained by at least one geometry obtaining method, selected from a group, consisting of dental impression, intraoral scanning, X-ray scanning, and at least two of these geometry obtaining method.

8. Method according to any of the preceding claims, wherein at least one suprastructure is attached to the mesostructural element (3), the at least one suprastructure replicating a plurality of teeth.

9. Method for dental restoration in an oral cavity, comprising:
- arranging at least one implant in a jawbone of the oral cavity,
- attaching a mesostructural element (3) obtained by a method according to at least one of claims 1 to 8 to the at least one implant, and
- attaching at least one suprastructure replicating a plurality of teeth to the mesostructural element (3).

10. Apparatus (1) for producing a mesostructural element (3), in particular according to the method of at least one of claims 1 to 8, the apparatus (1) comprising:
- a model mounting (5) for fixing a jawbone model (7),
- a LMD device (9) comprising a LMD nozzle (11),
- a positioning apparatus (13) for positioning the model mounting (5) and the LMD nozzle (11) relative to each other, the positioning apparatus (13) comprising at least four axes, and
- a control device (15) for controlling the positioning apparatus (13) and the LMD device (9).

11. Apparatus (1) according to claim 10, wherein the LMD device (9) has a laser power of 100 W to 300 W.

12. Apparatus (1) according to at least one of claims 10 and 11, further comprising a position determination device (18) for determining a position of a jawbone model (7) fixed at the model mounting (5) relative to the positioning apparatus (13), wherein preferably the position determination device (18) is selected from a group, consisting of a camera, a coordinate-measuring machine, and a combination of at least two of these devices.

13. Apparatus (1) according to at least one of claims 10 to 12, wherein the positioning apparatus (13) comprises at least five axes, preferably exactly five axes.

14. Apparatus (1) according to at least one of claims 10 to 13, wherein the positioning apparatus (13) comprises at least one of
- a first robot arm (16) carrying the LMD nozzle (11),
- a second robot arm carrying the model mounting (5), and
- a tilt/turn table, optionally with adjustable height, carrying the model mounting.
